# FASCICULE DE BREVET EUROPEEN

(11) **EP 2 309 634 B1**
(45) Date de publication et mention de la délivrance du brevet: **19.06.2013**
(21) Numéro de dépôt: 10176532.9
(22) Date de dépôt: 14.09.2010
(51) Int. Cl.: H02M 5/458, H02M 1/36, H02H 7/122

(54) **Convertisseur de puissance utilisant des transistors à effet de champ normalement fermés**
Stromwandler mit selbstleitenden Feldeffekttransistoren
Power converter employing normally on FETs

(30) Priorité: 08.10.2009 FR 0957015
(43) Date de publication de la demande: 13.04.2011
(73) Titulaire: Schneider Electric Industries SAS, 92500 Rueil-Malmaison (FR)
(72) Inventeur: Cadoux, Yvan, 38960, SAINT AUPRE (FR)
(74) Mandataire: Bié, Nicolas

(56) Documents cités:
- EP-A1- 1 168 588
- EP-A1- 2 093 871
- REBBEREH C ET AL: "First inverter using silicon carbide power switches only", EUROPEAN CONFERENCE ON POWER ELECTRONICS,, 1 janvier 2003 (2003-01-01), pages 1-10, XP008097914, ISBN: 978-90-75815-07-8

## Description

La présente invention se rapporte à un convertisseur de puissance comportant des transistors de commutation à effet de champ de type normalement fermé, ledit convertisseur de puissance étant destiné à être utilisé par exemple dans un variateur de vitesse, un système d'alimentation sécurisé ou un filtre actif.

Il est connu qu'un convertisseur de puissance comporte un bus d'alimentation de puissance doté d'une ligne positive et d'une ligne négative et sur lequel est appliquée une tension continue. Le convertisseur de puissance comporte en outre un condensateur de bus connecté entre la ligne positive et la ligne négative du bus d'alimentation et destiné à maintenir constante la tension continue sur le bus. Le convertisseur de puissance comporte plusieurs bras de commutation, en règle générale trois bras de commutation, connectés en aval du condensateur de bus, sur le bus d'alimentation de puissance. Chaque bras de commutation est connecté entre la ligne positive et la ligne négative du bus d'alimentation et peut comporter par exemple deux transistors de commutation à effet de champ de type normalement fermé montés en série sur le bras de commutation. Sur chaque bras, un point milieu de connexion situé entre les deux transistors est connecté à une charge électrique. Chaque transistor est commandé à l'aide d'un dispositif de commande permettant de lui appliquer une tension de commande pouvant assurer son blocage. De manière connue, les dispositifs de commande des transistors sont alimentés par un système d'alimentation auxiliaire connecté entre la ligne positive et la ligne négative du bus d'alimentation.

Lorsque le convertisseur de puissance utilise des transistors à effet de champ de type normalement fermé, il faut s'assurer lors du démarrage que les transistors des bras de commutation ne viennent pas court-circuiter le condensateur de bus, et ainsi empêcher la montée en tension du bus d'alimentation et le chargement du système d'alimentation auxiliaire. De même lors de l'arrêt du convertisseur, il faut s'assurer que les signaux de commande appliqués sur les grilles des transistors ne viennent court-circuiter brutalement le condensateur de bus avant que celui-ci soit complètement déchargé. Le document EP2093871 propose notamment une solution pour résoudre ce problème.

Le document EP1168588 décrit pour sa part une solution permettant de limiter le courant de charge dans le condensateur de bus d'un variateur de vitesse.

Le but de l'invention est de proposer un convertisseur de puissance dans lequel les bras de commutation ou les signaux de commande appliqués sur les grilles des transistors ne viennent pas court-circuiter le condensateur de bus respectivement lors du démarrage du convertisseur de puissance ou lors de l'arrêt du convertisseur de puissance.

Ce but est atteint par un convertisseur de puissance comportant :
- un bus d'alimentation de puissance doté d'une ligne positive et d'une ligne négative et sur lequel est appliquée une tension continue,
- un condensateur de bus, connecté entre la ligne positive et la ligne négative du bus d'alimentation,
- plusieurs bras de commutation connectés entre la ligne positive et la ligne négative du bus d'alimentation, chaque bras de commutation comportant deux transistors en série et un point milieu de connexion situé entre les deux transistors et relié à une charge électrique,
- les transistors des bras de commutation étant de type à effet de champ et commandés chacun par un dispositif de commande de grille afin d'alimenter la charge électrique,
- un premier interrupteur monté sur la ligne positive ou négative du bus d'alimentation, en amont du condensateur de bus,
- un second interrupteur monté en série avec le premier interrupteur sur la ligne positive ou négative du bus d'alimentation, en aval du condensateur de bus,
- des moyens de commande du premier interrupteur et du second interrupteur.

Selon une particularité, le premier interrupteur est monté en parallèle d'une résistance de limitation sur la ligne positive ou négative du bus d'alimentation.

Selon une autre particularité, les moyens de commande des deux interrupteurs comportent un relais à double pôle, chaque pôle correspondant à l'un des deux interrupteurs.

Selon une autre particularité, le relais est de type contacteur électromécanique.

Selon une autre particularité, les dispositifs de commande de grille des transistors sont alimentés par un système d'alimentation auxiliaire connecté entre la ligne positive et la ligne négative du bus d'alimentation.

Selon une autre particularité, les transistors à effet de champ des bras de commutation sont de type normalement fermé ou normalement ouvert.

Selon une autre particularité, les transistors des bras de commutation sont de type JFET.

Selon une autre particularité, les transistors JFET sont fabriqués en carbure de silicium ou nitrure de gallium.

L'invention concerne également un variateur de vitesse comportant un module redresseur, ledit variateur comportant également un convertisseur de puissance tel que défini dans l'une des revendications précédentes, monté en aval dudit module redresseur.

D'autres caractéristiques et avantages vont apparaître dans la description détaillée qui suit en se référant à un mode de réalisation donné à titre d'exemple et représenté par les dessins annexés sur lesquels :

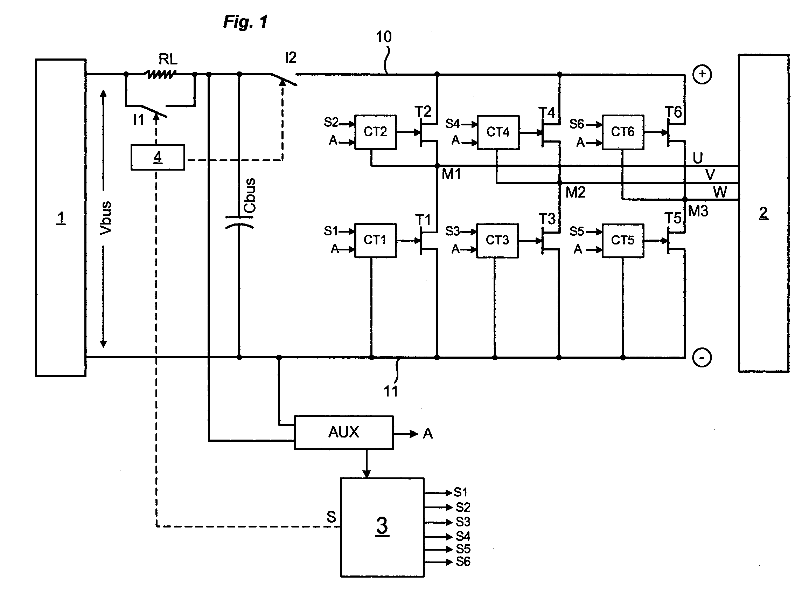

- la figure 1 représente le convertisseur de puissance de l'invention.

Le convertisseur de puissance de l'invention tel que représenté sur la figure 1 est utilisable par exemple dans un variateur de vitesse, un système d'alimentation sécurisé (UPS pour "Uninterruptible Power Supply") ou un filtre actif. Il est destiné à recevoir une tension d'entrée d'une source 1 et à appliquer une tension de sortie par exemple à une charge électrique 2. Dans une application de type variateur de vitesse, un module redresseur est utilisé en amont du convertisseur pour redresser la tension alternative provenant du réseau.

En référence à la figure 1, un convertisseur de puissance comporte typiquement un bus d'alimentation de puissance doté d'une ligne positive 10 et d'une ligne négative 11 et sur lequel est appliquée une tension continue Vbus. Le convertisseur de puissance comporte en outre un condensateur de bus Cbus connecté entre la ligne positive 10 et la ligne négative 11 du bus d'alimentation et destiné à maintenir constante la tension continue Vbus du bus d'alimentation. Le convertisseur de puissance comporte en outre, en aval du condensateur de bus Cbus, un module de commutation à n phases ayant sur chaque phase 2n transistors de commutation. Le module de commutation tel que représenté sur la figure 1 est à trois phases U, V, W et comporte donc trois bras de commutation connectés chacun entre la ligne positive 10 et la ligne négative 11 du bus d'alimentation. Chaque bras de commutation comporte un transistor haut T2, T4, T6 et un transistor bas T1, T3, T5 séparés par un point milieu de connexion M1, M2, M3 relié à la charge électrique 2.

Chaque transistor T1-T6 du module de commutation est du type à effet de champ (FET pour "Field Effect Transistor"). Un transistor à effet de champ tel que par exemple un JFET ou un MOSFET est un interrupteur électronique de puissance connu qui comporte une Grille de commande (G) dont la fonction est d'autoriser ou non le passage d'un courant entre un Drain (D) et une Source (S). Un tel transistor est dit de type normalement fermé (ou "Normally ON") si la tension V_{GS} entre la Grille et la Source est proche de zéro. Cela signifie que le chemin Drain-Source est passant ou conducteur en l'absence de tension de commande V_{GS}. En présence d'une tension de commande V_{GS} entre sa grille et sa source qui est négative, le transistor à effet de champ normalement fermé est commandé à l'ouverture. Un transistor de type JFET est commandé à l'ouverture en appliquant une tension grille-source V_{GS} par exemple au moins égale à -15 Volts et un transistor MOSFET avec une tension V_{GS} par exemple au moins égale à -5 Volts. Par ailleurs, le transistor est dit de type normalement ouvert (ou "normally OFF") si en l'absence d'une tension V_{GS} entre grille et source, le chemin Drain-Source n'est pas conducteur. Il nécessite donc une tension grille-source V_{GS} qui soit positive pour être commandé à la fermeture. Pour un transistor de type JFET normalement ouvert, cette tension positive est typiquement comprise entre +1 Volt et +3 Volts.

Les transistors à effet de champ employés dans le convertisseur de puissance de l'invention seront par exemple fabriqués dans un matériau à grande énergie de bande interdite (appelé également "matériau à grand gap" ou "wide-band gap material") tel que par exemple le carbure de silicium ou le nitrure de gallium. De manière connue, un transistor JFET réalisé dans un matériau à grande énergie de bande interdite et de type normalement fermé présente les avantages d'être plus rapide à commuter, de générer moins de pertes en conduction à l'état passant (faible résistance R_{DSon} à l'état passant), d'avoir une meilleure tenue en température et d'avoir une taille plus petite. Dans la suite de la description et sur les figures 1 et 2, les transistors T1-T6 utilisés sont par exemple de type JFET normalement fermé. Cependant, il faut comprendre que l'invention peut s'appliquer à des transistors JFET de type normalement ouvert car ceux-ci présentent un faible seuil de commande.

Chaque transistor à effet de champ T1-T6 des bras de commutation est commandé à l'ouverture grâce à un dispositif spécifique de commande CT1-CT6 de grille. Chaque dispositif de commande CT1-CT6 de grille est alimenté (A) grâce à un système d'alimentation auxiliaire AUX connecté entre la ligne positive 10 et la ligne négative 11 du bus d'alimentation de puissance et permet d'appliquer au transistor une tension de grille V_{G} pour commander le transistor à la fermeture ou à l'ouverture. En plus de l'alimentation (A), chaque dispositif de commande CT1-CT6 reçoit d'un système central de commande 3 des signaux de commande S1 à S6 à modulation de largeur d'impulsion (PWM en anglais pour "Pulse Width Modulation") respectant une loi de commande exécutée par le système central de commande 3. Chaque dispositif de commande CT2, CT4, CT6 des transistors hauts T2, T4, T6 est connecté au point milieu de connexion M1, M2, M3 du bras de commutation de son transistor tandis que chaque dispositif de commande CT1, CT3, CT5 des transistors bas T1, T3, T5 est connecté à la ligne négative 11 du bus d'alimentation de puissance. Les dispositifs de commande CT1-CT6 étant déjà connus, ils ne sont pas détaillés dans la présente demande.

Par ailleurs, le convertisseur de l'invention comporte sur la ligne positive 10 du bus d'alimentation, en amont du condensateur de bus Cbus une résistance de limitation RL appelée également résistance de précharge en parallèle de laquelle est monté un premier interrupteur I1. Cette résistance de limitation est active au démarrage pendant la phase de charge du bus d'alimentation. Dans un variateur de vitesse, elle permet de limiter le courant d'entrée à travers le module redresseur. Une fois le condensateur de bus Cbus chargé, la résistance de limitation RL est court-circuitée par le premier interrupteur I1 monté en parallèle.

Le convertisseur de puissance comporte également sur la ligne positive 10 du bus d'alimentation en aval du condensateur de bus Cbus un second interrupteur I2. Les deux interrupteurs µl1, I2 sont donc connectés en série sur la ligne positive 10 du bus d'alimentation et positionnés de part et d'autre du point de connexion du condensateur de bus Cbus sur la ligne positive 10 du bus d'alimentation. Ce second interrupteur I2 permet d'isoler les bras de commutation du bus d'alimentation lors de la charge du condensateur de bus Cbus.

Selon l'invention, les deux interrupteurs I1, I2 sont par exemple des relais synchronisés entre eux et commandés par les moyens de commande 3 décrits ci-dessus. Les relais sont par exemple de type électromécanique. Dans une variante de réalisation, les deux relais sont remplacés par un seul relais mécanique, par exemple de type contacteur 4 bipolaire. Selon l'invention, il est en effet possible de réutiliser le contacteur 4 déjà employé pour commander le premier interrupteur I1 et de lui adjoindre un second pôle pour commander le second interrupteur I2. Chaque pôle du contacteur représente alors un interrupteur I1, I2 à commander. En envoyant un seul signal de commande S au contacteur 4, les deux interrupteurs I1, I2 sont alors commandés simultanément.

Le convertisseur de puissance de l'invention fonctionne de la manière suivante :
Avant la mise sous tension, le condensateur de bus Cbus est déchargé et les transistors T1-T6 qui sont normalement ouverts sont fermés car aucune tension de commande n'est appliquée sur leurs grilles respectives. Les deux interrupteurs I1 et I2 sont ouverts et la tension du système d'alimentation auxiliaire AUX est nulle.

Lors du démarrage du convertisseur, la source 1 applique une tension continue sur le bus d'alimentation de puissance entraînant le chargement du condensateur de bus Cbus. La tension du bus Vbus augmente. Le condensateur de bus Cbus est chargé via la résistance de limitation RL. Les deux interrupteurs I1 et I2 restent ouverts. Le second interrupteur I2 étant à l'état ouvert, les trois bras de commutation sont découplés du condensateur de bus Cbus. Ceci permet donc la montée de la tension aux bornes du condensateur de bus Cbus et de la tension du système d'alimentation auxiliaire AUX.

Une fois que le condensateur de bus Cbus est chargé, le système d'alimentation auxiliaire AUX a terminé son démarrage et est donc chargé. Le système d'alimentation auxiliaire AUX permet alors d'alimenter les dispositifs de commandes CT1-CT6 des transistors T1-T6 du module de commutation. Les transistors T1-T6 peuvent donc être commandés directement à l'ouverture par leur dispositif de commande CT1-CT6 en appliquant une tension de commande sur leurs grilles respectives. Une fois que tous les transistors T1-T6 sont ouverts, les deux interrupteurs I1 et I2 sont commandés simultanément à la fermeture. Pour cela, les moyens de commande 3 envoient le signal de commande S au contacteur 4 lui donnant l'ordre de fermer les deux interrupteurs I1, I2. La résistance de limitation RL se trouve alors court-circuitée via le premier interrupteur I1 et le bus d'alimentation se trouve désormais connecté aux bras de commutation via le second interrupteur I2. Le convertisseur peut alors fonctionner normalement.

Lors de l'arrêt du convertisseur, les moyens de commande 3 stoppent le contacteur 4, ce qui entraîne l'ouverture simultanée des deux interrupteurs I1 et I2. Les bras de commutation sont alors à nouveau isolés électriquement du bus d'alimentation. Avant l'ouverture complète des deux interrupteurs I1, I2, le système d'alimentation auxiliaire AUX doit garantir un niveau de tension suffisant pour conserver les transistors T1-T6 à l'état d'ouverture.

Selon l'invention, les deux interrupteurs I1 et I2 peuvent également être positionnés en série sur la ligne négative 11 du bus d'alimentation, de part et d'autre du point de connexion du condensateur de bus Cbus sur cette ligne.

Il est bien entendu que l'on peut, sans sortir du cadre de l'invention telle que revendiquée, imaginer d'autres variantes et perfectionnements de détail et de même envisager l'emploi de moyens équivalents.

## Revendications

1. Convertisseur de puissance comportant :
- un bus d'alimentation de puissance doté d'une ligne positive (10) et d'une ligne négative (11) et sur lequel est appliquée une tension continue (Vbus),
- un condensateur de bus (Cb), connecté entre la ligne positive (10) et la ligne négative (11) du bus d'alimentation,
- plusieurs bras de commutation connectés entre la ligne positive (10) et la ligne négative (11) du bus d'alimentation, chaque bras de commutation comportant deux transistors en série et un point milieu de connexion (M1, M2, M3) situé entre les deux transistors et relié à une charge électrique (2),
- les transistors (T1-T6) des bras de commutation étant de type à effet de champ normalement fermé et commandés chacun par un dispositif de commande de grille (CT1-CT6) afin d'alimenter la charge électrique (2),
- un premier interrupteur (11) monté sur la ligne positive (10) ou négative (11) du bus d'alimentation, en amont du condensateur de bus (Cbus),
**caractérisé en ce que** le convertisseur de puissance comporte :
- un second interrupteur (12) monté en série avec le premier interrupteur sur la ligne positive (10) ou négative (11) du bus d'alimentation, en aval du condensateur de bus (Cbus),
- des moyens de commande (3) du premier interrupteur (11) et du second interrupteur (12).

2. Convertisseur selon la revendication 1, **caractérisé en ce que** le premier interrupteur (11) est monté en parallèle d'une résistance de limitation (RL) sur la ligne positive (10) ou négative du bus d'alimentation.

3. Convertisseur selon la revendication 1 ou 2, **caractérisé en ce que** les moyens de commande (3) des deux interrupteurs (I1, I2) comportent un relais à double pôle, chaque pôle correspondant à l'un des deux interrupteurs.

4. Convertisseur selon la revendication 3, **caractérisé en ce que** le relais est de type contacteur électromécanique (4).

5. Convertisseur de puissance selon l'une des revendications 1 à 4, **caractérisé en ce que** les dispositifs de commande (CT1-CT6) de grille des transistors sont alimentés par un système d'alimentation auxiliaire (AUX) connecté entre la ligne positive (10) et la ligne négative (11) du bus d'alimentation.

6. Convertisseur de puissance selon la revendication 1, **caractérisé en ce que** les transistors (T1-T6) des bras de commutation sont de type JFET.

7. Convertisseur de puissance selon la revendication 6, **caractérisé en ce que** les transistors JFET sont fabriqués en carbure de silicium ou nitrure de gallium.

8. Variateur de vitesse comportant un module redresseur, **caractérisé en ce qu'**il comporte également un convertisseur de puissance tel que défini dans l'une des revendications précédentes, monté en aval dudit module redresseur.

## Patentansprüche

1. Leistungsumformer, der aufweist:
- einen Leistungsversorgungsbus, der mit einer positiven Leitung (10) und mit einer negativen Leitung (11) versehen ist und an den eine Gleichspannung (Vbus) angelegt wird,
- einen Buskondensator (Cb), der zwischen der positiven Leitung (10) und der negativen Leitung (11) des Versorgungsbusses angeschlossen ist,
- mehrere Schaltarme, die zwischen der positiven Leitung (10) und der negativen Leitung (11) des Versorgungsbusses angeschlossen sind, wobei jeder Schaltarm zwei in Reihe geschaltete Transistoren und einen Verbindungsmittelpunkt (M1, M2, M3) aufweist, der sich zwischen den zwei Transistoren befindet und mit einer elektrischen Last (2) verbunden ist,
- wobei die Transistoren (T1-T6) der Schaltarme von der Art normalerweise geschlossener Feldeffekttransistor sind und je von einer Gate-Steuervorrichtung (CT1-CT6) gesteuert werden, um die elektrische Last (2) zu versorgen,
- einen ersten Unterbrecher (11), der auf die positive (10) oder negative Leitung (11) des Versorgungsbusses vor dem Buskondensator (Cbus) montiert ist,
**dadurch gekennzeichnet, dass** der Leistungsumformer aufweist:
- einen zweiten Unterbrecher (12), der mit dem ersten Unterbrecher in Reihe auf die positive (10) oder die negative Leitung (11) des Versorgungsbusses hinter dem Buskondensator (Cbus) montiert ist,
- Steuereinrichtungen (3) des ersten Unterbrechers (I1) und des zweiten Unterbrechers (I2).

2. Umformer nach Anspruch 1, **dadurch gekennzeichnet, dass** der erste Unterbrecher (I1) mit einem Begrenzungswiderstand (RL) auf die positive (10) oder negative Leitung des Versorgungsbusses parallel montiert ist.

3. Umformer nach Anspruch 1 oder 2, **dadurch gekennzeichnet, dass** die Steuereinrichtungen (3) der zwei Unterbrecher (I1, I2) ein zweipoliges Relais aufweisen, wobei jeder Pol einem der zwei Unterbrecher entspricht.

4. Umformer nach Anspruch 3, **dadurch gekennzeichnet, dass** das Relais von der Art elektromechanisches Schütz (4) ist.

5. Leistungsumformer nach einem der Ansprüche 1 bis 4, **dadurch gekennzeichnet, dass** die Gate-Steuereinrichtungen (CT1-CT6) der Transistoren von einem Hilfsversorgungssystem (AUX) versorgt werden, das zwischen der positiven Leitung (10) und der negativen Leitung (11) des Versorgungsbusses angeschlossen ist.

6. Leistungsumformer nach Anspruch 1, **dadurch gekennzeichnet, dass** die Transistoren (T1-T6) der Schaltarme von der Art JFET sind.

7. Leistungsumformer nach Anspruch 6, **dadurch gekennzeichnet, dass** die JFET-Transistoren aus Siliciumcarbid oder Galliumnitrid hergestellt sind.

8. Umrichter, der ein Gleichrichtermodul aufweist, **dadurch gekennzeichnet, dass** er ebenfalls einen Leistungsumformer wie in einem der vorhergehenden Ansprüche definiert aufweist, der hinter dem Gleichrichtermodul montiert ist.

## Claims

1. Power converter comprising:
- a power supply bus provided with a positive line (10) and a negative line (11), and to which is applied a DC voltage (Vbus),
- a bus capacitor (Cb) connected between the positive line (10) and the negative line (11) of the power supply bus,
- a number of switching legs connected between the positive line (10) and the negative line (11) of the power supply bus, each switching leg comprising two series-connected transistors and a connection mid-point (M1, M2, M3) situated between the two transistors and connected to an electrical load (2),
- the transistors (T1-T6) of the switching legs being of the normally ON field-effect type and each controlled by a gate control device (CT1-CT6) in order to power the electrical load (2),
- a first switch (I1) connected to the positive line (10) or negative line (11) of the power supply bus, upstream of the bus capacitor (Cbus),
**characterized in that** the power converter comprises:
- a second switch (I2) connected in series with the first switch on the positive line (10) or negative line (11) of the power supply bus, downstream of the bus capacitor (Cbus),
- control means (3) for the first switch (I1) and the second switch (I2).

2. Power converter according to Claim 1, **characterized in that** the first switch (I1) is connected in parallel with a limiting resistor (RL) on the positive line (10) or negative line of the power supply bus.

3. Power converter according to Claim 1 or 2, **characterized in that** the control means (3) for the two switches (I1, I2) comprise a double-pole relay, each pole corresponding to one of the two switches.

4. Power converter according to Claim 3, **characterized in that** the relay is of the electromechanical contactor type (4).

5. Power converter according to one of Claims 1 to 4, **characterized in that** the gate control devices (CT1-CT6) for the transistors are powered by an auxiliary power supply system (AUX) connected between the positive line (10) and the negative line (11) of the power supply bus.

6. Power converter according to Claim 1, **characterized in that** the transistors (T1-T6) of the switching legs are of JFET type.

7. Power converter according to Claim 6, **characterized in that** the JFET transistors are fabricated from silicon carbide or gallium nitride.

8. Variable speed drive comprising a rectifier module, **characterized in that** it also comprises a power converter as defined in one of the preceding claims, connected downstream of said rectifier module.
